(19) Europäisches Patentamt
European Patent Office
Office européen des brevets

(11) **EP 4 661 303 A1**

(12) **EUROPEAN PATENT APPLICATION**

(43) Date of publication:
**10.12.2025 Bulletin 2025/50**

(21) Application number: **25180244.3**

(22) Date of filing: **02.06.2025**

(51) International Patent Classification (IPC):
**H04B 7/0426** (2017.01)       **H04B 7/0456** (2017.01)
**H04B 7/06** (2006.01)       **G06F 17/16** (2006.01)

(52) Cooperative Patent Classification (CPC):
**H04B 7/0617; H04B 7/0434; H04B 7/0456;**
**G06F 17/16**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **05.06.2024 FI 20245719**

(71) Applicant: **Nokia Solutions and Networks Oy
02610 Espoo (FI)**

(72) Inventor: **QIU, Shuang
Stuttgart (DE)**

(74) Representative: **Nokia EPO representatives
Nokia Technologies Oy
Karakaari 7
02610 Espoo (FI)**

(54) **WIDEBAND BEAMFORMING FOR MIMO SYSTEMS**

(57)     According to an aspect, there is provided an apparatus configured to perform the following. The apparatus obtains an approximate effective channel matrix for a radio channel between the apparatus, acting as a transmitter, and a receiver. The apparatus calculates an eigenvalue decomposition, EVD, of a matrix product of the approximate effective channel matrix and a conjugate transpose of the approximate effective channel matrix and determines, based on the EVD, a left singular matrix of a singular value decomposition, SVD, of the approximate effective channel matrix and a diagonal matrix of singular values of the SVD of the approximate effective channel matrix. The apparatus calculates eigenvectors of the approximate effective channel matrix based on the approximate effective channel matrix and the left singular matrix of the SVD

> 301: Obtain approximate effective channel matrix for radio channel

> 302: Calculate EVD of matrix product of approximate effective channel matrix and conjugate transpose of approximate effective channel matrix

> 303: Determine, based on EVD, left singular matrix of SVD of approximate effective channel matrix and diagonal matrix of singular values of SVD of approximate effective channel matrix

> 304: Calculate eigenvectors of approximate effective channel matrix based on approximate effective channel matrix, left singular matrix of SVD and diagonal matrix of singular values of SVD

> 305: Perform beamforming based at least on eigenvectors

FIG. 3

**Description**

TECHNICAL FIELD

Various example embodiments relate to wireless communications.

BACKGROUND

Massive multiple input multiple output (MIMO) is a wireless communication technology that utilizes a large number of antennas at a base station to serve multiple terminal devices simultaneously. While in traditional MIMO systems, there are typically only a few antennas at the base station, in massive MIMO systems, the number of antennas may be in the order of tens or hundreds. Massive MIMO is used, e.g., in 5G communication systems and will continue to evolve in 6G to extreme MIMO (eMIMO) systems with 128 or even 256 antennas (and thus also the same number of transceiver chains). The very large number of antennas provides sufficient spatial degrees of freedom which can significantly improve the spectrum efficiency by transmitting multiple streams at the same time by using beamforming/-precoding.

SUMMARY

According to an aspect, there is provided the subject matter of the independent claims. Embodiments are defined in the dependent claims.

According to a first aspect, there is provided an apparatus comprising:

at least one processor; and
at least one memory storing instructions that, when executed by the at least one processor, cause the apparatus at least to perform:

obtaining an approximate effective channel matrix for a radio channel between the apparatus, acting as a transmitter, and a receiver;
calculating an eigenvalue decomposition, EVD, of a matrix product of the approximate effective channel matrix and a conjugate transpose of the approximate effective channel matrix;
determining, based on the EVD, a left singular matrix of a singular value decomposition, SVD, of the approximate effective channel matrix and a diagonal matrix of singular values of the SVD of the approximate effective channel matrix; and
calculating eigenvectors of the approximate effective channel matrix based on the approximate effective channel matrix, the left singular matrix of the SVD and the diagonal matrix of singular values of the SVD.

According to a second aspect, there is a method comprising:

obtaining an approximate effective channel matrix for a radio channel between the apparatus, acting as a transmitter, and a receiver;
calculating an eigenvalue decomposition, EVD, of a matrix product of the approximate effective channel matrix and a conjugate transpose of the approximate effective channel matrix;
determining, based on the EVD, a left singular matrix of a singular value decomposition, SVD, of the approximate effective channel matrix and a diagonal matrix of singular values of the SVD of the approximate effective channel matrix; and
calculating eigenvectors of the approximate effective channel matrix based on the approximate effective channel matrix, the left singular matrix of the SVD and the diagonal matrix of singular values of the SVD.

According to a third aspect, there is provided a non-transitory computer readable medium comprising program instructions that, when executed by an apparatus, cause the apparatus to perform at least the following:

obtaining an approximate effective channel matrix for a radio channel between the apparatus, acting as a transmitter, and a receiver;
calculating an eigenvalue decomposition, EVD, of a matrix product of the approximate effective channel matrix and a conjugate transpose of the approximate effective channel matrix;
determining, based on the EVD, a left singular matrix of a singular value decomposition, SVD, of the approximate effective channel matrix and a diagonal matrix of singular values of the SVD of the approximate effective channel matrix; and

calculating eigenvectors of the approximate effective channel matrix based on the approximate effective channel matrix, the left singular matrix of the SVD and the diagonal matrix of singular values of the SVD.

One or more examples of implementations are set forth in more detail in the accompanying drawings and the description below. Other features will be apparent from the description and drawings, and from the claims.

BRIEF DESCRIPTION OF THE DRAWINGS

FIG. 1 illustrates a system to which some embodiments may be applied;

FIG. 2 illustrates an example of sounding reference signal (SRS) frequency hopping;

FIGs. 3 to 4 illustrate processes according to some embodiments with dashed lines used for indicating optional features;

FIG. 5 illustrates an example of SRS frequency hopping and application of a process according to embodiments to it;

FIG. 6 illustrates a process according to some embodiments applied to frequency hopping use case; and

FIG. 7 illustrates an apparatus according to some embodiments.

DETAILED DESCRIPTION OF SOME EMBODIMENTS

The following embodiments are only presented as examples. Although the specification may refer to "an", "one", or "some" embodiment(s) and/or example(s) in several locations of the text, this does not necessarily mean that each reference is made to the same embodiment(s) or example(s), or that a particular feature only applies to a single embodiment and/or example. Single features of different embodiments and/or examples may also be combined to provide other embodiments and/or examples.
As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.
In the following, the following mathematical notational conventions are employed. Matrices are denoted using bold non-italic capital letters. Vectors are denoted using bold italic letters. Scalars are denoted using non-bold italic letters. Superscript 'H' is used for denoting conjugate transpose operation. The symbol "*" is used for indicating a matrix product.
As used in the following, the term "wideband" as used in expressions "wideband beamforming" and "wideband radio or SRS channel" may be defined to refer to a frequency band which is larger (or even significantly larger) than a coherence bandwidth of the radio (or SRS) channel. Such a wideband frequency band may cover multiple PRBs. In contrast to a narrowband radio or SRS channel, a wideband radio or SRS channel (and thus also wideband beamforming) may be assumed to be affected by frequency selective fading.
In the following, different exemplifying embodiments will be described using, as an example of an access architecture to which the embodiments may be applied, a radio access architecture based on long term evolution advanced (LTE Advanced, LTE-A) or new radio (NR, 5G), without restricting the embodiments to such an architecture, however. It is obvious for a person skilled in the art that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth®, personal communications services (PCS), ZigBee®, wideband code division multiple access (WCDMA), systems using ultra-wideband (UWB) technology, sensor networks, mobile ad-hoc networks (MANETs), Internet Protocol multimedia subsystems (IMS), rebel SIM (R-SIM) for code division multiple access (CDMA) technologies such as 1x and 1x evolution data optimized (1xEV-DO), global system for mobile communications (GSM), open radio access network (O-RAN) or any combination thereof.

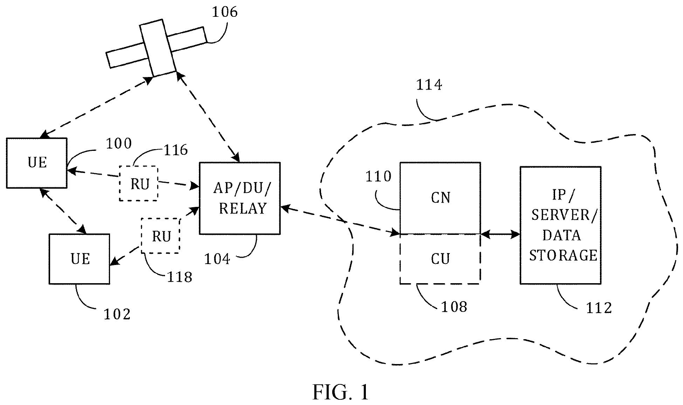

FIG. 1 depicts examples of simplified system architectures only showing some elements and functional entities, all being logical units, whose implementation may differ from what is shown. The connections shown in FIG. 1 are logical connections; the actual physical connections may be different. It is apparent to a person skilled in the art that the system typically comprises also other functions and structures than those shown in FIG. 1.

The embodiments are not, however, restricted to the system given as an example but a person skilled in the art may apply the solution to other communication systems provided with necessary properties.

The example of FIG. 1 shows a part of an exemplifying radio access network.

A communications system typically comprises more than one (e/g)NodeB 104 in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 110 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc.

The user device 100, 102 (also called UE, user equipment, user terminal, terminal device, etc.) illustrates one type of an apparatus to which resources on the air interface are allocated and assigned, and thus any feature described herein with a user device may be implemented with a corresponding apparatus, such as a relay node. An example of such a relay node is a layer 3 relay (self-backhauling relay) towards the base station. The user equipment may comprise a mobile equipment and at least one universal integrated circuit card (UICC).

The user device 100, 102 typically refers to a portable computing device that includes wireless mobile communication devices operating with or without a subscriber identity (or identification) module (SIM) or UICC, including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. Here, the SIM may be a physical SIM which may be removable by a user or an embedded SIM (eSIM) embedded directly into the user device 100, 102 (and thus not being removable by a user). It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction. Thus, the user devices may not enable direct user interaction or may enable only limited user interaction (e.g., during setup). The user device (or in some embodiments a layer 3 relay node) is configured to perform one or more of user equipment functionalities. The user device may also be called a terminal device, a subscriber unit, mobile station, remote terminal, access terminal, user terminal or user equipment (UE) just to mention but a few names or apparatuses. Each user device 100, 102 may comprise one or more antennas.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in FIG. 1) may be implemented.

5G enables using MIMO antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications, including vehicular safety, different sensors and real-time control. 5G is expected to have multiple radio interfaces, namely below 6GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 112, or utilize services provided by them. The communication network may also be able to support the usage of cloud services, for example at least part of core network operations may be carried out as a cloud service (this is depicted in FIG. 1 by "cloud" 114). The communication system may also comprise a central control entity, or a like, providing facilities for networks of different operators to cooperate for example in spectrum sharing.

Edge cloud may be brought into the RAN by utilizing network function virtualization (NVF) and software defined networking (SDN). Using edge cloud may mean access node operations to be carried out, at least partly, in a server, host or node operationally coupled to a remote radio head or unit (RU) 116, 118 or base station comprising radio parts. It is also possible that node operations will be distributed among a plurality of servers, nodes or hosts. Application of cloudRAN architecture enables RAN real time functions being carried out at the RAN side (in a distributed unit, DU 104) and non-real time functions being carried out in a centralized manner (in a central or centralized unit, CU 108). Thus, in summary, the RAN may comprise, in some embodiments, at least one distributed access node comprising a central unit 108, one or more distributed units 104 communicatively connected to the central unit 108 and one or more (remote) radio heads or units 116, 118, each of which is communicatively connected to at least one of the one or more distributed units 104.

It should also be understood that the distribution of labor between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future rail-way/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite 106 in the mega-constellation may cover several satellite-enabled network entities that create on-ground cells. The on-ground cells may be created through an on-ground relay node 104 or by a gNB located on-ground or in a satellite.

It is obvious for a person skilled in the art that the depicted system is only an example of a part of a radio access system and in practice, the system may comprise a plurality of (e/g)NodeBs, the user device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of FIG. 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)NodeBs, includes, in addition to Home (e/g)NodeBs (H(e/g)nodeBs), a home node B gateway, or HNB-GW (not shown in FIG. 1). A HNB Gateway (HNB-GW), which is typically installed within an operator's network may aggregate traffic from a large number of HNBs back to a core network.

6G architecture is targeted to enable easy integration of everything, such as a network of networks, joint communication and sensing, non-terrestrial networks and terrestrial communication. 6G systems are envisioned to encompass machine learning algorithms as well as local and distributed computing capabilities, where virtualized network functions can be distributed over core and edge computing resources. Far edge computing, where computing resources are pushed to the very edge of the network, will be part of the distributed computing environment, for example in "zero-delay" scenarios. Some 5G systems may also employ such capabilities. More generally, the actual (radio) communication system is envisaged to be comprised of one or more computer programs executed within a programmable infrastructure, such as general-purpose computing entities (servers, processors, and like).

6G networks are expected to adopt flexible decentralized and/or distributed computing systems and architecture and ubiquitous computing, with local spectrum licensing, spectrum sharing, infrastructure sharing, and intelligent automated management underpinned by mobile edge computing, artificial intelligence, short-packet communication, distributed ledgers and blockchain technologies. Key features of 6G will include intelligent connected management and control functions, programmability, integrated sensing and communication, reduction of energy footprint, trustworthy infrastructure, scalability and affordability. In addition to these, 6G is also targeting new use cases covering the integration of localization and sensing capabilities into system definition to unifying user experience across physical and digital worlds

As mentioned above, the system of FIG. 1 may support MIMO or specifically massive or extreme MIMO. In a closed-loop time division duplex (TDD)-mode massive (or extreme) MIMO system, an access node estimates uplink wideband channel via received reference signals for channel estimation and designs beamforming/precoding for downlink (DL) data transmission based on the estimated radio channels (the uplink channel estimation being valid also for the downlink channel due to channel reciprocity in TDD). Reference signals for channel estimation may be, e.g., sounding reference signals (SRSs) or demodulation reference signal (DMRSs). The estimated radio channels may be equally called SRS channels or DMRS channels (depending on the type of reference signals used). In practice, the estimated radio channel in a MIMO system is defined typically using a channel matrix which describes the relationships between signals transmitted using a plurality of transmit antennas and signals received using a plurality of receive antennas. The DL performance of massive (or extreme) MIMO system is, thus, mainly influenced by radio channel estimation accuracy and used beamforming schemes.

In general, beamforming schemes may be divided into two categories depending on the signal bandwidth: narrowband beamforming and wideband beamforming. Narrowband beamforming (i.e., beamforming where the used bandwidth is smaller than the coherence bandwidth of the channel) has been widely studied under the assumption that SRS channels on the whole bandwidth are available, e.g., using zero-forcing. However, obtaining an accurate wideband SRS channel in practice has proved challenging due to the limited power typically available at the terminal device side, especially for the terminal devices at cell edge. The accuracy of the wideband SRS channel (as defined, e.g., via a channel matrix) can be strongly influenced by noise. Low accuracy of the wideband SRS channel may lead to poor performance of narrowband beamforming.

Frequency hopping provides one way for improving the accuracy of the SRS-based channel estimation. In frequency hopping, the carrier frequency of the transmitted signal (here, the SRS) is changed rapidly and continuously over time according to a pre-defined sequence (being, e.g., a periodic sequence). In other words, instead of sending a single wideband SRS, multiple SRSs are sent following a pre-defined sequence.

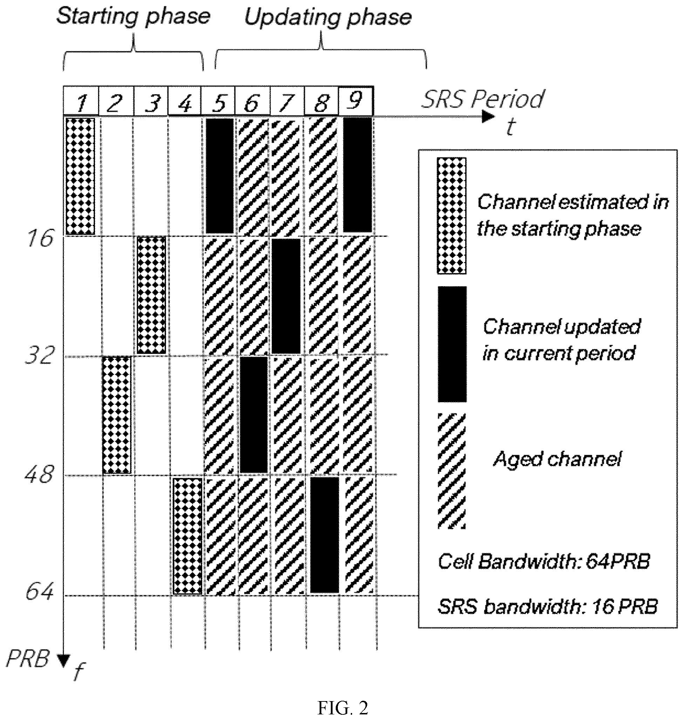

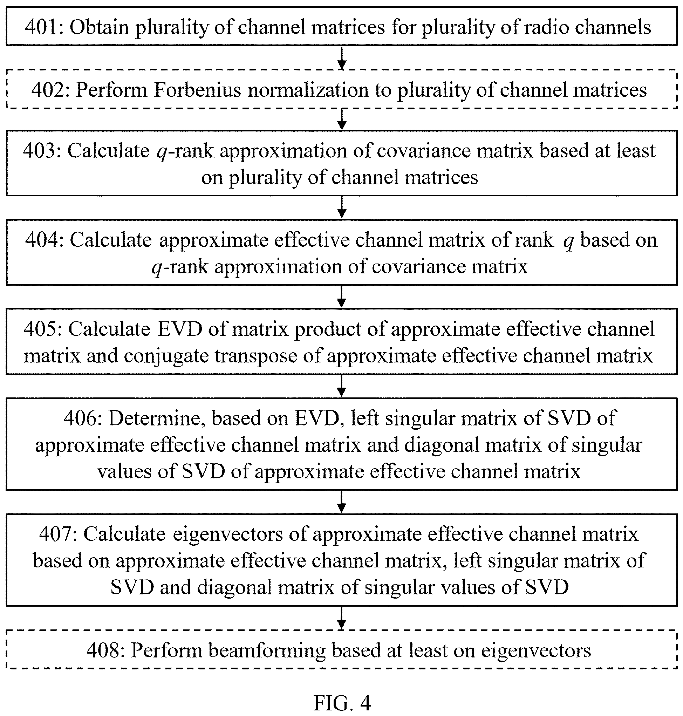

FIG. 2 shows one example of frequency hopping applied to transmission of SRSs. Namely, FIG. 2 illustrates transmitted physical resource blocks (PRBs) as function of SRS periods. In FIG. 2, the hopping granularity is 16 PRB and the cell bandwidth is 64 PRB. The SRS frequency hopping may be divided into two distinct phases: a starting phase and an updating phase, as shown in FIG. 2. In the starting phase, only partial bands of SRS are available at the access node. It takes multiple SRS periods to receive wideband SRS signal completely. In the example of FIG. 2, 4 SRS periods (as illustrated with a diagonal check pattern) are needed to completely update the wideband SRS channels. In the SRS updating phase, different segments of SRS frequency bands update in turns during different SRS periods. In other words, during a given SRS period in the SRS updating phase, channel update is carried out for certain PRBs (shown in FIG. 2 as black rectangles) but not for all. In these other PRBs, the channel may be considered aged (illustrated in FIG. 2 with diagonal lines), that is, the channel estimate for these PRBs at this SRS period is out-of-date and waiting to be updated.

As may be deduced from the above discussion, the frequency hopping has the disadvantage that it may extend the period needed for obtaining the wideband SRS channels. This serves, in turn, to aggravate the impact of frequency selective fading and channel aging in beamforming design. When the complete wideband SRS channels are unavailable, narrowband beamforming cannot be carried out. However, wideband beamforming does not share this problem.

Considering the difficulty in obtaining wideband SRS, the embodiments to be discussed below provide a wideband beamforming solution (or at least a solution for deriving eigenvectors of a channel matrix usable for wideband beamforming) usable at least in connection with the following scenarios:

- Wideband SRS is available but with low accuracy (e.g., due to strong noise or low power on SRS signal transmission at terminal device).
- Frequency hopping is enabled for SRSs.

While the above discussion considered specifically use of SRSs for channel estimation, it should be appreciated that the above considerations at least related to the first bullet point may apply equally also for other types of reference signals suitable for channel estimation (e.g., DMRS). Thus, the embodiments to be discussed below are also not limited to use of SRSs.

To guarantee the performance of the proposed wideband beamforming schemes according to embodiments, second-order statistics of radio channels (e.g., SRS channels) are used to extract stable spatial direction by obtaining eigenvectors. Considering the high computational complexity of eigenvalue decomposition (EVD), the embodiments will provide a low-complexity wideband beamforming algorithm (LCWBB). The LCWBB may comprise two key procedures (or at least one of them): the first procedure is to calculate an approximate low-rank effective downlink channel, and the second one is to obtain eigenvectors with reduced complexity based on the obtained effective downlink channel, as will be described in further detail below.

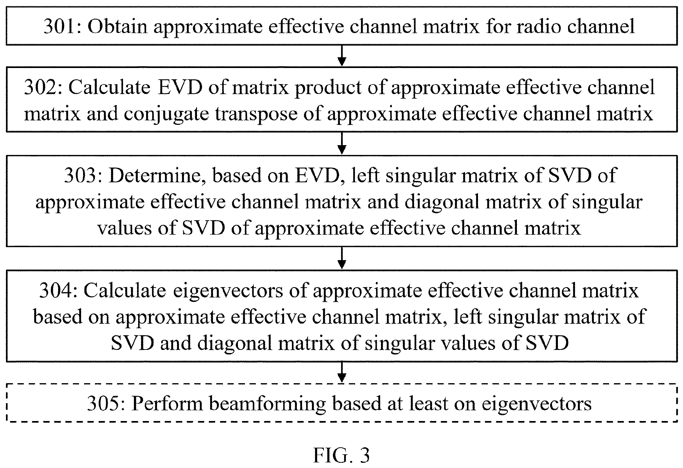

FIG. 3 illustrates a process for estimating eigenvectors of a radio channel (being, e.g., a wideband radio channel) according to embodiments. The process of FIG. 3 may be carried out by an apparatus. The apparatus may be an access node such as an access node 104 of FIG. 1 or a part thereof. In some embodiments, the apparatus may be a distributed access node or at least one of RU, DU or RU of the distributed access node. For example, the apparatus may be an RU 116, 118 of FIG. 1, a DU 104 of FIG. 1, a CU 108 of FIG. 1 or a combination thereof. In the following, the entity carrying out the process of FIG. 4 is called simply an apparatus.

The apparatus may be assumed to comprise or be connected to a plurality of (transmit) antennas (and an associated plurality of transmitter or transceiver processing chains). In some embodiments, the number of antennas at the apparatus for beamforming transmission is larger than or equal to 32 or larger than or equal to 64 or larger than or equal to 256. The apparatus may be able to communicate with one or more receivers. Each of the one or more receivers may be or form a part of a terminal device. Each receiver (e.g., a terminal device) may be assumed to comprise one or more (receive) antennas. At least one of the one or more receivers may be assumed to comprise a plurality of (receive) antennas. Thus, the transmitter may form, with each of the at least one receiver with multiple antennas, a MIMO system, a massive MIMO system or even extreme MIMO system. The MIMO system (or the massive or extreme MIMO system) may be a closed-loop TDD-mode MIMO system.

Referring to FIG. 3, the apparatus obtains, in block 301, an approximate effective channel matrix for a radio channel between the apparatus, acting (at least) as a transmitter, and a receiver. The receiver may be or form a part of a terminal device, as discussed above. In some embodiments, the radio channel may be between the apparatus (e.g., an access node), acting as a transceiver, and another transceiver (e.g., a terminal device). The radio channel may be a (wideband) radio channel corresponding to combined (e.g., averaged or median) channel characteristics experienced by multiple antennas at the transmitter and the receiver over multiple PRBs. The radio channel may be, e.g., an SRS or DMRS channel. Accordingly, the approximate effective channel matrix for the channel may be an approximate effective channel matrix for a wideband channel having a frequency bandwidth comprising a plurality of PRBs.

The approximate effective channel matrix for the radio channel may be an effective (wideband) channel matrix $\mathbf{H}_{dl}^{apr} \in \mathbb{C}^{q \times N_t}$, where "apr" stands for approximate, "dl" stands for downlink, $N_t$ is the number of antennas at the apparatus (i.e., at the transmitter) and $q$ is a positive integer at least smaller than or equal to $N_t$. In some embodiments, q may be smaller than the number of antennas at the receiver denoted as $N_r$. The effective (wideband) channel matrix $\mathbf{H}_{dl}$ may correspond to a q-rank approximation of the effective (wideband) channel. How the approximate effective channel matrix for the radio channel may be determined based on a plurality of channel matrices for a plurality of estimated radio channels at a plurality of PRBs is discussed in detail in connection with FIG. 4.

In some embodiments, the obtaining of the approximate effective channel matrix in block 301 may comprise indirectly measuring the approximate effective channel matrix. Namely, the apparatus may obtain or measure a plurality of channel matrices for a plurality of radio channels, where the plurality of channel matrices correspond to a respective plurality of PRBs forming a frequency bandwidth of the radio channel, and, then, calculate or derive the approximate effective channel matrix based on said measured plurality of channel matrices. This is discussed in further detail in connection with FIG. 4.

In some embodiments, the approximate effective channel matrix for the radio channel may be pre-defined or received from another apparatus.

As mentioned above, the goal of the process is calculating of eigenvectors of $\mathbf{H}_{dl}^{apr}$. Specifically, we would like to calculate a matrix $\mathbf{V}_{dl}^{apr}$ of a singular value decomposition (SVD) of $\mathbf{H}_{dl}^{apr}$. The SVD of $\mathbf{H}_{dl}^{apr}$ may be written as:

$$\mathbf{H}_{dl}^{apr} = \mathbf{U}_{dl,apr}\mathbf{\Sigma}_{dl,apr}\mathbf{V}_{dl,apr}^{H}, \qquad\qquad (1)$$

where $\mathbf{U}_{dl,apr} \in \mathbb{C}^{q*q}$ is the left singular matrix of the SVD of the approximate effective channel matrix $\mathbf{H}_{dl}^{apr}$, $\mathbf{\Sigma}_{dl,apr} \in \mathbb{C}^{q*N_t}$ is a diagonal matrix of singular values of the SVD of the approximate effective channel matrix

$\mathbf{H}_{\mathrm{dl}}^{\mathrm{apr}}$ and $\mathbf{V}_{\mathrm{dl,apr}} \in \mathbb{C}^{N_t * N_t}$ is the right singular matrix of the SVD of the approximate effective channel matrix $\mathbf{H}_{\mathrm{dl}}^{\mathrm{apr}}$ defining eigenvectors. The set of eigenvectors defined by $\mathbf{V}_{\mathrm{dl,apr}}$ represent the directions of maximum channel capacity or power and, thus, they may be used for beamforming (that is, for selecting optimal beams for transmission). These eigenvectors represent the spatial directions in which the transmitted signal should be focused. However, direct numerical calculation of the SVD of $\mathbf{H}_{\mathrm{dl}}^{\mathrm{apr}}$ is a computationally demanding task. The embodiments perform this calculation in an alternative way which is associated with low computational complexity.

First, the apparatus calculates, in block 302, an eigenvalue decomposition (EVD) of a matrix product of the approximate effective channel matrix and a conjugate transpose of the approximate effective channel matrix. In other words, the apparatus calculates the EVD of the $\mathbf{H}_{\mathrm{dl}}^{\mathrm{apr}}\left(\mathbf{H}_{\mathrm{dl}}^{\mathrm{apr}}\right)^{\mathrm{H}} \in \mathbb{C}^{q*q}$. According to a general definition of the EVD, the apparatus derives, thus, matrices $\mathbf{Q}$ and $\Lambda$ which satisfy the relationship:

$$\mathrm{EVD}(\mathbf{H}_{\mathrm{dl}}^{\mathrm{apr}}\left(\mathbf{H}_{\mathrm{dl}}^{\mathrm{apr}}\right)^{\mathrm{H}}) = \mathbf{Q}_{\mathbf{HH}}\Lambda_{\mathbf{HH}}\mathbf{Q}_{\mathbf{HH}}^{-1}, \qquad (2)$$

where $\mathbf{Q}_{\mathrm{HH}} \in \mathbb{C}^{q*q}$ defines eigenvectors of $\mathbf{H}_{\mathrm{dl}}^{\mathrm{apr}}\left(\mathbf{H}_{\mathrm{dl}}^{\mathrm{apr}}\right)^{\mathrm{H}}$ and $\Lambda_{\mathrm{HH}} \in \mathbb{C}^{q*q}$ is a diagonal matrix defining eigenvalues of $\mathbf{H}_{\mathrm{dl}}^{\mathrm{apr}}\left(\mathbf{H}_{\mathrm{dl}}^{\mathrm{apr}}\right)^{\mathrm{H}}$.

Then, the apparatus determines, in block 303, based on the EVD, a left singular matrix ($\mathbf{U}_{\mathrm{dl,apr}}$) of an SVD of the approximate effective channel matrix and a diagonal matrix of singular values ($\Sigma_{\mathrm{dl,apr}}$) of the SVD of the approximate effective channel matrix.

The determination in block 303 may be based on a fundamental relationship between the EVD and SVD. Namely, for any matrix $\mathbf{M}$ which has an SVD $\mathbf{M} = \mathbf{U}\Sigma\mathbf{V}^{\mathrm{H}}$, the following relations hold:

$$\mathbf{M}^{\mathrm{H}}\mathbf{M} = \mathbf{V}(\Sigma^{\mathrm{H}}\Sigma)\mathbf{V}^{\mathrm{H}} = \mathbf{V}(\Sigma^{\mathrm{H}}\Sigma)\mathbf{V}^{-1} \qquad (3)$$

$$\mathbf{M}\mathbf{M}^{\mathrm{H}} = \mathbf{U}(\Sigma^{\mathrm{H}}\Sigma)\mathbf{U}^{\mathrm{H}} = \mathbf{U}(\Sigma^{\mathrm{H}}\Sigma)\mathbf{U}^{-1} \qquad (4)$$

where the right-hand sides of the above relations describe the EVD of the matrices $\mathbf{M}^{\mathrm{H}}\mathbf{M}$ and $\mathbf{M}\mathbf{M}^{\mathrm{H}}$ using matrices of the SVD **of M** (i.e., matrices $\mathbf{U}$, $\Sigma$ and $\mathbf{V}$). In other words, $\mathbf{V}$ (i.e., the right singular matrix of the SVD **of M**) defines eigenvectors of $\mathbf{M}^{\mathrm{H}}\mathbf{M}$, U (i.e., the left singular matrix of the SVD **of M**) defines eigenvectors of $\mathbf{M}\mathbf{M}^{\mathrm{H}}$ and $\Sigma^{\mathrm{H}}\Sigma$ is a diagonal matrix defining eigenvalues of $\mathbf{M}^{\mathrm{H}}\mathbf{M}$ or $\mathbf{M}\mathbf{M}^{\mathrm{H}}$. It should be noted that $\mathbf{V}^{\mathrm{H}} = \mathbf{V}^{-1}$ and $\mathbf{U}^{\mathrm{H}} = \mathbf{U}^{-1}$ holds here due to the fact that matrices $\mathbf{V}$ and $\mathbf{U}$ are, by definition, (square) unitary matrices.

Applying the fundamental relationship of (4) to $\mathbf{H}_{\mathrm{dl}}^{\mathrm{apr}}\left(\mathbf{H}_{\mathrm{dl}}^{\mathrm{apr}}\right)^{\mathrm{H}}$, the EVD of $\mathbf{H}_{\mathrm{dl}}^{\mathrm{apr}}\left(\mathbf{H}_{\mathrm{dl}}^{\mathrm{apr}}\right)^{\mathrm{H}}$ may be written as

$$\mathrm{EVD}(\mathbf{H}_{\mathrm{dl}}^{\mathrm{apr}}\left(\mathbf{H}_{\mathrm{dl}}^{\mathrm{apr}}\right)^{\mathrm{H}}) = \mathbf{U}_{\mathrm{dl,apr}}\left(\Sigma_{\mathrm{dl,apr}}^{\mathrm{H}}\Sigma_{\mathrm{dl,\mathbf{apr}}}\right)\mathbf{U}_{\mathrm{dl,apr}}^{\mathrm{H}} = \mathbf{U}_{\mathrm{dl,apr}}\Sigma_{\mathrm{dl,apr}}^{2}\mathbf{U}_{\mathrm{dl,apr}}^{\mathrm{H}} \qquad (5)$$

where $\mathbf{U}_{\mathrm{dl,apr}} \in \mathbb{C}^{q*q}$ is the left singular matrix $\mathbf{U}_{\mathrm{dl,apr}}$ of the SVD of the approximate effective channel matrix $\mathbf{H}_{\mathrm{dl}}^{\mathrm{apr}}$ and $\Sigma_{\mathrm{dl,apr}} \in \mathbb{C}^{q*N_t}$ is a diagonal matrix of singular values of the SVD of the approximate effective channel matrix $\mathbf{H}_{\mathrm{dl}}^{\mathrm{apr}}$, as defined also in (1). Considering the definition of the EVD in (2), the left singular matrix $\mathbf{U}_{\mathrm{dl,apr}}$ of the SVD of the approximate effective channel matrix $\mathbf{H}_{\mathrm{dl}}^{\mathrm{apr}}$ may be determined to be equal to the square eigenvector matrix $\mathbf{Q}_{\mathrm{HH}}$ of the EVD of $\mathbf{H}_{\mathrm{dl}}^{\mathrm{apr}}\left(\mathbf{H}_{\mathrm{dl}}^{\mathrm{apr}}\right)^{\mathrm{H}}$. On the other hand, diagonal matrix of singular values $\Sigma_{\mathrm{dl,apr}}$ of the SVD of the approximate

effective channel matrix $\mathbf{H}_{dl}^{apr}$ may be determined based on the diagonal eigenvalue matrix $\Lambda_{\mathbf{HH}}$ of the EVD of

$\mathbf{H}_{dl}^{apr}\left(\mathbf{H}_{dl}^{apr}\right)^H$ as $\Lambda_{\mathbf{HH}} = \mathbf{\Sigma}_{dl,apr}^2$ holds.

Finally, the apparatus calculates, in block 304, eigenvectors of the approximate effective channel matrix based on the approximate effective channel matrix, the left singular matrix of the SVD and the diagonal matrix of singular values of the SVD. As mentioned above, the eigenvectors may be defined by the right singular matrix $\mathbf{V}_{dl,apr}$ of the SVD of the approximate effective channel matrix $\mathbf{H}_{dl}^{apr}$. The right singular matrix $\mathbf{V}_{dl,apr}$ may be used as a (wideband) beamforming matrix. Specifically, the apparatus may calculate the eigenvectors of the approximate effective channel matrix, in block 304, based on the approximate effective channel matrix and the left singular matrix of the SVD is performed according to

$$\mathbf{V}_{dl,apr} = \left(\mathbf{H}_{dl}^{apr}\right)^H \mathbf{U}_{dl,apr}\left(\mathbf{\Sigma}_{dl,apr}^H\right)^{-1}. \qquad (6)$$

Thereafter, the apparatus may perform, in block 305, beamforming based on the eigenvectors of the approximate effective channel matrix (i.e., based on $\mathbf{V}_{dl,apr}$ being a beamforming matrix). This may comprise, for example, calculating beamforming weights (or a beamforming matrix containing or defining the beamforming weights) based on the eigenvectors or certain selected eigenvectors and applying said beamforming weights to transmit antennas of the apparatus. The beamforming may be, e.g., downlink beamforming. Actions pertaining to block 305 may be considered optional (i.e., block 305 may be omitted in some embodiments).

FIG. 4 illustrates a process for obtaining an approximate effective channel matrix for a radio channel and estimating eigenvectors of the radio channel based thereon according to embodiments. The process of FIG. 4 may be carried out by an apparatus. The apparatus may be an access node such as an access node 104 of FIG. 1 or a part thereof. In some embodiments, the apparatus may be a distributed access node or at least one of RU, DU or RU of the distributed access node. For example, the apparatus may be an RU 116, 118 of FIG. 1, a DU 104 of FIG. 1, a CU 108 of FIG. 1 or a combination thereof. In the following, the entity carrying out the process of FIG. 4 is called simply an apparatus.

The process of FIG. 4 may correspond to one more detailed implementation of the process of FIG. 3. Thus, any of the features and definitions (relating, e.g., to the apparatus) provided in connection with FIG. 3 may apply, *mutatis mutandis,* also here.

Referring to FIG. 4, the apparatus initially obtains, in block 401, a plurality of channel matrices for a plurality of radio channels (e.g., SRS channels). The plurality of channel matrices correspond to respective plurality of PRBs forming a frequency bandwidth (e.g., a cell bandwidth) or a part thereof. A channel matrix of the plurality of channel matrices is denoted in the following as $\mathbf{H}_{i,t} \in \mathbb{C}^{N_r * N_t}$, where $i$ is a PRB index (i.e., the channel matrix corresponds to an i-th PRB) and $t$ is the reference signal (e.g., SRS) period index (i.e., the channel matrix corresponds to a t-th reference signal period). The plurality of radio channels obtained in block 401 may correspond to a single value of $t$ (e.g., $t = 1$) and values 1, 2,..., $L$ of $i$, where $L$ is a positive integer indicating the total number of PRBs in the frequency bandwidth (e.g., the cell bandwidth). In some alternative embodiments, the plurality of radio channels obtained in block 401 may correspond to a plurality of consecutive values of $t$ (e.g., $t = 1, 2, 3$ & 4). The process of FIG. 4 (and also the process of FIG. 3 or at least blocks 301 to 305 thereof) may be repeated at each reference signal period. The covariance matrix $\mathbf{R}_{refsig}$ of the plurality of radio channels may be defined as

$$\mathbf{R}_{refsig} = \frac{1}{L}\sum_{i}^{L} \mathbf{H}_{i,t}^H \mathbf{H}_{i,t}, \qquad (7)$$

where "refsig" refers to reference signals (e.g., SRSs) based on which the channel matrices $\mathbf{H}_{i,t}$ and, thus, also the covariance matrix is calculated.

In practice, the obtaining of the plurality of channel matrices in block 401 may comprise at least the following two steps. The apparatus may perform measurements of one or more reference signals (e.g., one or more SRSs or one or more DMRSs) at the plurality of PRBs (using one or more antennas). The one or more reference signals may be any reference signals suitable for channel estimation (e.g., one or more SRSs or one or more DMRSs). Each reference signal may have a bandwidth of $n$ PRBs, where is a positive integer larger than one (e.g., $n = 16$). The one or more reference signals may be transmitted by the same transmitter (e.g., by the same terminal device). The one or more reference signals and the plurality of PRBs may correspond to a pre-defined frequency hopping pattern (that is, to one or more hops of the pre-defined frequency hopping pattern). Then, the apparatus may determine the plurality of channel matrices based on results of the measurements of the one or more reference signals.

As an optional feature, the apparatus may perform, in block 402, normalization for the plurality of channel matrices. The normalization may correspond, e.g., to Forbenius normalization. In other words, the apparatus may normalize the plurality of channel matrices $\mathbf{H}_{i,t}$ according to

$$\mathbf{H}_{i,t} = \frac{\mathbf{H}_{i,t}}{\|\mathbf{H}_{i,t}\|_{\mathrm{F}}}, i = 1, \dots, L \qquad (8)$$

where the operation $\|\ \|_{\mathrm{F}}$ is the Forbenius norm (equally called Euclidean norm) defined as a square root of the sum of the absolute squares of the elements of the matrix to which it is applied. In other embodiments, some other norm may be employed in (8) instead of the Forbenius norm.

The apparatus calculates (or determines), in block 403, a $q$-rank approximation of a covariance matrix based at least on the plurality of channel matrices. Here, $q$ is a positive integer. In other words, the apparatus calculates a $q$-rank approximation $\mathbf{R}_{\mathrm{refsig}}^{\mathrm{apr}}$ of the covariance matrix $\mathbf{R}_{\mathrm{refsig}}$ of (7) or at least factor matrices (namely, matrices $\mathbf{R}_{\mathrm{dl,q}}$ & $\mathbf{R}_{\mathrm{dl,dlq}}$) forming the $q$-rank approximation $\mathbf{R}_{\mathrm{refsig}}^{\mathrm{apr}}$. According to a general definition, in the factorization of a matrix, factor matrices are matrices that when multiplied together in a certain order (possibly after applying a matrix inversion, a transpose or a conjugate transpose or other such matrix operation on one or more of the matrices) form the original matrix.

In some embodiments, the calculation of the $q$-rank approximation of the covariance matrix may be further based one or more channel matrices obtained (and optionally normalized) before execution of block 401. Said one or more channel matrices may correspond to one or more previous time slots (e.g., one or more previous reference signal periods) compared to the one or more channel matrices obtained in block 401.

In some embodiments, the rank $q$ may be defined to be smaller than or equal to the number of receiver antennas associated with the radio channel (i.e., $q \le N_r$). In the following, the $q$-rank approximation of the covariance matrix is derived in this particular case.

It is initially assumed that the effective (wideband) channel matrix is $\mathbf{H}_{\mathrm{dl}} \in \mathbb{C}^{q \times N_t}$, whose Gramian matrix $\mathbf{H}_{\mathrm{dl}}^{\mathrm{H}}\mathbf{H}_{\mathrm{dl}}$ is an approximation of $\boldsymbol{R}_{SRS}$. Then, two matrices $\mathbf{G}_{\mathrm{dl}}$ and $\mathbf{C}_{\mathrm{dl}}$ may be defined as $\mathbf{G}_{\mathrm{dl}} = \mathbf{H}_{\mathrm{dl}}^{\mathrm{H}}\mathbf{H}_{\mathrm{dl}} \in \mathbb{C}^{N_t \times N_t}$ and $\mathbf{C}_{\mathrm{dl}} = \mathbf{H}_{\mathrm{dl}}\mathbf{H}_{\mathrm{dl}}^{\mathrm{H}} \in \mathbb{C}^{q \times q}$. By applying SVD to matrices $\mathbf{H}_{\mathrm{dl}}$, $\mathbf{C}_{\mathrm{dl}}$ and $\mathbf{G}_{\mathrm{dl}}$ and considering (3) & (4), we obtain:

$$\mathbf{H}_{\mathrm{dl}} = \mathbf{U}_{\mathrm{dl}}\boldsymbol{\Sigma}_{\mathrm{dl}}\mathbf{V}_{\mathrm{dl}}^{\mathrm{H}}, \quad \mathbf{C}_{\mathrm{dl}} = \mathbf{U}_{\mathrm{dl}}\boldsymbol{\Sigma}_{\mathrm{dl}}^{2}\mathbf{U}_{\mathrm{dl}}^{\mathrm{H}}, \quad \mathbf{G}_{\mathrm{dl}} = \mathbf{V}_{\mathrm{dl}}\boldsymbol{\Sigma}_{\mathrm{dl}}^{2}\mathbf{V}_{\mathrm{dl}}^{\mathrm{H}}. \qquad (9)$$

Next, it is assumed that a sub-matrix $\mathbf{H}_{\mathrm{dl,q}}$ with dimensions $q \times q$ extracted from $\mathbf{H}_{\mathrm{dl}}$ should possess similar spatial properties as $\mathbf{H}_{\mathrm{dl}}$. Namely, $\mathbf{H}_{\mathrm{dl,q}}$ is defined to be a $q \times q$ submatrix of $\mathbf{H}_{\mathrm{dl}}$. $\mathbf{H}_{\mathrm{dl,q}}$ may be extracted from any part of $\mathbf{H}_{\mathrm{dl}}$. For example, $\mathbf{H}_{\mathrm{dl,q}}$ may be defined to consist of the first $q$ rows and first $q$ columns of $\mathbf{H}_{dl}$. Considering this newly defined matrix, we may write:

$$\mathbf{H}_{\mathrm{dl,q}} = \mathbf{U}_{\mathrm{dl,q}}\boldsymbol{\Sigma}_{\mathrm{dl,q}}\mathbf{V}_{\mathrm{dl,q}}^{\mathrm{H}}, \qquad \mathbf{C}_{\mathrm{dl,q}} = \mathbf{U}_{\mathrm{dl,q}}\boldsymbol{\Sigma}_{\mathrm{dl,q}}^{2}\mathbf{U}_{\mathrm{dl,q}}^{\mathrm{H}}, \qquad \mathbf{G}_{\mathrm{dl,q}} = \mathbf{V}_{\mathrm{dl,q}}\boldsymbol{\Sigma}_{\mathrm{dl,q}}^{2}\mathbf{V}_{\mathrm{dl,q}}^{\mathrm{H}}. \qquad (10)$$

Moreover, the matrices $\mathbf{U}_{\mathrm{dl}}$ and $\mathbf{V}_{\mathrm{dl,q}}$ may be represented as:

$$\mathbf{U}_{\mathrm{dl}} = \mathbf{H}_{\mathrm{dl}}\mathbf{V}_{\mathrm{dl}}\boldsymbol{\Sigma}_{\mathrm{dl}}^{-1}, \quad \mathbf{V}_{\mathrm{dl,q}} = \mathbf{H}_{\mathrm{dl,q}}^{\mathrm{H}}\mathbf{U}_{\mathrm{dl,q}}\boldsymbol{\Sigma}_{\mathrm{dl,q}}^{-1}. \qquad (11)$$

Replacing $\mathbf{V}_{\mathrm{dl}}$, $\boldsymbol{\Sigma}_{\mathrm{dl}}$ by $\mathbf{V}_{\mathrm{dl,q}}$ and $\boldsymbol{\Sigma}_{\mathrm{dl,q}}$, an approximation of $\mathbf{U}_{dl}$ can be obtained as

$$\mathbf{U}_{\mathrm{dl}}^{\mathrm{apr}} = \mathbf{H}_{\mathrm{dl}}\mathbf{V}_{\mathrm{dl,q}}\boldsymbol{\Sigma}_{\mathrm{dl,q}}^{-1} = \mathbf{H}_{\mathrm{dl}}\mathbf{H}_{\mathrm{dl,q}}^{\mathrm{H}}\mathbf{U}_{\mathrm{dl,q}}\boldsymbol{\Sigma}_{\mathrm{dl,q}}^{-2}. \qquad (12)$$

Finally, an approximation for $\mathbf{R}_{\mathrm{refsig}}$ can be obtained as:

$$\mathbf{R}_{\text{refsig}}^{\text{apr}} = \mathbf{U}_{\text{dl}}^{\text{apr}}\Sigma_{\text{dl},q}^{2}\left(\mathbf{U}_{\text{dl}}^{\text{apr}}\right)^{\text{H}} = \mathbf{H}_{\text{dl}}\mathbf{H}_{\text{dl},q}^{\text{H}}\mathbf{U}_{\text{dl},q}\Sigma_{\text{dl},q}^{-2}\Sigma_{\text{dl},q}^{2}\left(\mathbf{H}_{\text{dl}}\mathbf{H}_{\text{dl},q}^{\text{H}}\mathbf{U}_{\text{dl},q}\Sigma_{\text{dl},q}^{-2}\right)^{\text{H}}. \qquad (13)$$

The equation (13) may be further simplified to

$$\mathbf{R}_{\text{refsig}}^{\text{apr}} = \mathbf{H}_{\text{dl}}\mathbf{H}_{\text{dl},q}^{\text{H}} * \left(\mathbf{U}_{\text{dl},q}\left(\Sigma_{\text{dl},q}^{-2}\right)^{\text{H}}\mathbf{U}_{\text{dl},q}^{\text{H}}\right) * \left(\mathbf{H}_{\text{dl}}\mathbf{H}_{\text{dl},q}^{\text{H}}\right)^{\text{H}} \qquad (14)$$

and even further to

$$\mathbf{R}_{\text{refsig}}^{\text{apr}} = \mathbf{R}_{\text{dl,dlq}}\mathbf{R}_{\text{dl},q}^{-1}\left(\mathbf{R}_{\text{dl,dlq}}\right)^{\text{H}}, \qquad (15)$$

where $\mathbf{R}_{\text{dl,dlq}} = \mathbf{H}_{\text{dl}}^{\text{H}}\mathbf{H}_{\text{dl},q} \in \mathbb{C}^{N_t * q}$ and $\mathbf{R}_{\text{dl},q}^{-1} = \mathbf{U}_{\text{dl},q}\left(\Sigma_{\text{dl},q}^{-2}\right)^{\text{H}}\mathbf{U}_{\text{dl},q}^{\text{H}} = \mathbf{H}_{\text{dl},q}^{\text{H}}\mathbf{H}_{\text{dl},q} \in \mathbb{C}^{q \times q}$. The matrices $\mathbf{R}_{\text{dl,dlq}}$ and $\mathbf{R}_{\text{dl},q}$ may be, alternatively, calculated according to

$$\mathbf{R}_{\text{dl,dlq}} = \frac{1}{L}\sum_{i=1}^{L}\mathbf{H}_{i,t}^{\text{H}}\mathbf{H}_{i,t,q}, \qquad (16)$$

$$\mathbf{R}_{\text{dl},q} = \frac{1}{L}\sum_{i=1}^{L}\mathbf{H}_{i,t,q}^{\text{H}}\mathbf{H}_{i,t,q}, \qquad (17)$$

where $\mathbf{H}_{i,t,q}$ is a $N_r \times q$ submatrix consisting of $q$ columns of $\mathbf{H}_{i,t}$ (e.g., the first $q$ columns of $\mathbf{H}_{i,t}$). Thus, in summary, the calculating of the $q$-rank approximation of the covariance matrix $\mathbf{R}_{\text{refsig}}^{\text{apr}}$ in block 403 may be performed according to (15), (16) & (17) or at least according to (16) & (17).

In a wideband system, the rank of the covariance matrix $\mathbf{R}_{\text{refsig}}$ of the radio channel (being, e.g., an SRS channel) may not necessarily be limited by $N_r$ due to existence of frequency selective fading. Therefore, in contrast to the above discussion, in some alternative embodiments, the rank $q$ may be selected to be larger than the number of receive antennas $N_r$ to improve the accuracy of the approximation of the covariance matrix. In these cases, the rank $q$ may still be smaller than or equal to the number of transmit antennas $N_t$.

In aforementioned embodiments where q > $N_r$ applies, the matrices $\mathbf{R}_{\text{dl,dlq}}$ and $\mathbf{R}_{\text{dl},q}$ can be determined as

$$\mathbf{R}_{\text{dl,dlq}} = \mathbf{R}_{\text{refsig}}(:,S) \in \mathbb{C}^{N_t \times q}, \qquad (18)$$

$$\mathbf{R}_{\text{dl},q} = \mathbf{R}_{\text{refsig}}(S,S) \in \mathbb{C}^{q \times q}, \qquad (19)$$

where $S$ is a set of index values selected for extracting submatrices from $\mathbf{R}_{\text{refsig}} \in \mathbb{C}^{N_t \times N_t}$. As shown in (18) & (19), the set of index values are used for extracting a subset of columns from $\mathbf{R}_{\text{refsig}}$ to form $\mathbf{R}_{\text{dl,dlq}}$ or a subset of columns and rows from $\mathbf{R}_{\text{refsig}}$ to form $\mathbf{R}_{\text{dl},q}$. The set $S$ consists altogether of $q$ index values. The values in S are integers larger than or equal to 1 and smaller than or equal to $N_t$. One example of $S$ is $S = [1, 2, ..., q]$.

In some alternative embodiments, the set $S$ may be selected by determining the received power at each antenna of the apparatus based on the radio channel (i.e., based on radio measurements of the radio channel such as the SRS channel) and, then, selecting the $q$ indices included in $S$ so as to match indices of antennas associated with $q$ highest received power values.

The apparatus calculates, in block 404, the approximate effective channel matrix ($\mathbf{H}_{\text{dl}}^{\text{apr}}$) having rank $q$ based on the $q$-rank approximation of the covariance matrix ($\mathbf{R}_{\text{refsig}}^{\text{apr}}$). Specifically, the calculation of the $q$-rank approximation of the covariance matrix may be based on factor matrices (e.g., $\mathbf{R}_{dl,dlq}$ & $\mathbf{R}_{dl,q}$) of the $q$-rank approximate covariance matrix $\mathbf{R}_{refsig}^{apr}$.

In some embodiments, since $\mathbf{R}_{refsig}^{apr}$ can be expressed as $\mathbf{R}_{refsig}^{apr} = \left(\mathbf{H}_{dl}^{apr}\right)^{H}\mathbf{H}_{dl}^{apr}$, a rank-$q$ approximation $\mathbf{H}_{dl}^{apr}$ of the effective (wideband) channel $\mathbf{H}_{dl}$ may be calculated, in block 404, by solving the following equation for $\mathbf{H}_{dl}^{apr}$:

$$\left(\mathbf{H}_{dl}^{apr}\right)^{H}\mathbf{H}_{dl}^{apr} = \mathbf{R}_{refsig}^{apr}. \tag{20}$$

Considering the $q$-rank approximate covariance matrix $\mathbf{R}_{refsig}^{apr}$ and its factorization as defined in (15)-(17) or (15) & (18)-(19), the rank-q approximation $\mathbf{H}_{dl}^{apr}$ of the effective (wideband) channel $\mathbf{H}_{dl}$ may be calculated as

$$\mathbf{H}_{dl}^{apr} = \left(\mathbf{R}_{dl,dlq}\mathbf{R}_{dl,q}^{-\frac{1}{2}}\right)^{H} \in \mathbb{C}^{q \times N_t}. \tag{21}$$

Following the calculation of the approximate effective channel matrix in block 404, the apparatus may carry out the processes described in connection with blocks 301 to 304 or blocks 301 to 305 of FIG. 3 based on the calculated approximate effective channel matrix ($\mathbf{H}_{dl}^{apr}$). In other words, blocks 405 to 408 of FIG. 4 may correspond fully to blocks 302 to 305 of FIG. 3 and are, thus, not described here (again) for brevity.

In some alternative embodiments, the process may comprise only the steps for calculating the approximate effective channel matrix as described in connection with blocks 401 to 404 of FIG. 4. In further alternative embodiments, the steps for calculating the approximate effective channel matrix as described in connection with blocks 401 to 404 of FIG. 4 may be combined with a method for calculating the eigenvectors other than the one discussed in connection with blocks 301 to 304 of FIG. 3.

The embodiments described above provide the following benefits. Instead of directly calculating the EVD of covariance matrix $\mathbf{R}_{refsig} \in \mathbb{C}^{N_t \times N_t}$ as in conventional schemes for deriving eigenvectors, the embodiments only involve the EVD of $q \times q$ matrices, reducing computational cost from $O(N_t^3)$ to $O(N_t q^2)$. Moreover, instead of requiring storing the $N_t \times N_t$ matrix $\mathbf{R}_{refsig}$ to a memory, the embodiments only require storing of the $N_t \times q$ matrix $\mathbf{R}_{dl,dlq}$ and the $q \times q$ matrix $\mathbf{R}_{dl,q}$, reducing storage cost from $O(N_t^2)$ to $O(N_t q)$.

One use case to which the embodiments may be applied is one where an estimate for a wideband radio (or SRS) channel is available (e.g., in the form of a channel matrix for the radio channel), but it is not accurate due to presence of strong noise. In such use cases, the embodiments, (e.g., the process of FIG. 3 and/or 4) may be directly used to obtain eigenvectors of the approximate effective channel matrix based on the estimated radio channels (i.e., a plurality of channel matrices for a plurality of radio channels) and further a wideband beamforming matrix based on the eigenvectors.

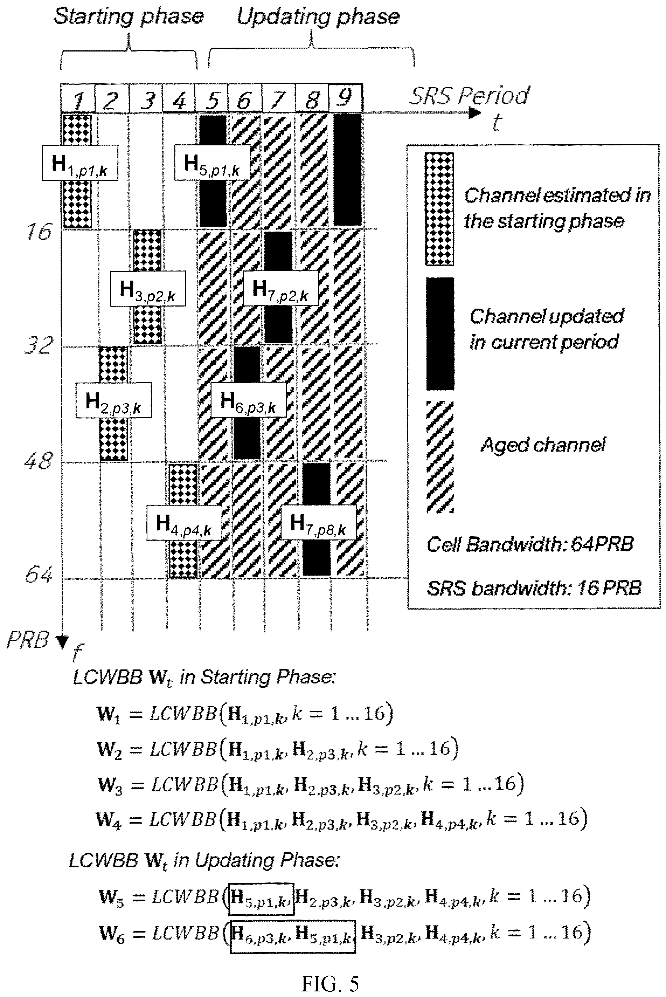

Another typical use case for the embodiments (e.g., the process of FIG. 3 and/or 4) is one where frequency hopping is employed for channel estimation reference signals such as SRS signals, that is, the use case discussed previously in connection with FIG. 2. FIG. 5 shows the same example of SRS frequency hopping (i.e., the same frequency hopping pattern) as previously shown in FIG. 2. However, FIG. 5 also shows how the process according to embodiments may be applied to it. Namely, FIG. 5 shows the SRS channel matrices for the SRS channels and beamforming matrices formed based thereon. In FIG. 5 and in the following discussion, the SRS channel matrix at the $k$-th PRB of the n-th (frequency) segmentation and the $t$-th SRS period is denoted as $\mathbf{H}_{t,pn,k}$ with $n = 1, \dots N$, $k = 1, \dots \frac{L}{N}$, where $L$ is the cell bandwidth in PRBs, $N$ is the total segmentation of frequency hopping (i.e., the number of (frequency) segments in the pre-defined frequency hopping pattern) and $\frac{L}{N}$ is the hopping granularity in PRBs. In the illustrated example, we have $L = 64$, $N = 4$ is 4 and $\frac{L}{N} = 16$. Wideband beamforming matrix for the $t$-th time slot is denoted as $\mathbf{W}_t$. Thus, each estimated $\mathbf{W}_t$ corresponds to one execution of the process of FIG. 4. The abbreviation LCWBB (low-complexity wideband beamforming) is used here for referring to the process of FIG. 4 which takes as its input a plurality of channel (here, SRS) matrices.

In the starting phase of SRS frequency hopping, only partial frequency bands of the SRSs are available and wideband SRSs have not been fully collected. The LCWBB at different SRS periods is calculated based on available SRS channels. In other words, during the starting phase, the number of the one or more channel matrices ($\mathbf{H}_{t,pn,k}$) used as an input of the LCWBB process is equal to a total number of channel matrices obtained this far (i.e., 16, 32, 48 or 64 for the 4 SRS periods in the illustrated example). As more and more SRS channels are estimated, the wideband beamforming performance is improved more and more. The bottom part of FIG. 5 shows the inputs of each LCWBB calculation in the starting phase. For example, at the 4th SRS period, the LCWBB is calculated based on the input of $\mathbf{H}_{1,p1,k}$, $\mathbf{H}_{2,p3,k}$, $\mathbf{H}_{3,p2,k}$, $\mathbf{H}_{4,p4,k}$, $k = 1, ...,16$, expressed as $\mathbf{W}_4 = LCWBB(\mathbf{H}_{1,p1,k}, \mathbf{H}_{2,p3,k}, \mathbf{H}_{3,p2,k}, \mathbf{H}_{4,p4,k}, k = 1, ...,16)$.

In the SRS updating phase, partial frequency bands of the SRSs are updated in turns. The LCWBB may, thus, be updated based on the newest SRS channels on the specific segmentation and the aged SRS channels on the other segmentation. In other words, during the SRS updating phase, the number of the channel matrices ($\mathbf{H}_{t,pn,k}$) used as an input of the LCWBB process is equal to a product of the SRS bandwidth in PRBs and the number of (frequency) segments in the pre-defined hopping pattern (i.e., 16*4 = 64 in the illustrated example). The most recently obtained channel matrices are used as the input. The bottom part of FIG. 5 shows the inputs of each LCWBB calculation in the updating phase, where the SRS channels obtained during the updating phase are highlighted with a surrounding rectangular box. For example, the LCWBB at the 5th SRS period may take as its input of $\mathbf{H}_{5,p1,k}$, $\mathbf{H}_{2,p3,k}$, $\mathbf{H}_{3,p2,k}$, $\mathbf{H}_{4,p4,k}$, $k = 1 ... 16$ and output a wideband beamforming matrix $\mathbf{W}_5 = LCWBB(\mathbf{H}_{5,p1,k}, \mathbf{H}_{2,p3,k}, \mathbf{H}_{3,p2,k}, \mathbf{H}_{4,p4,k})$.

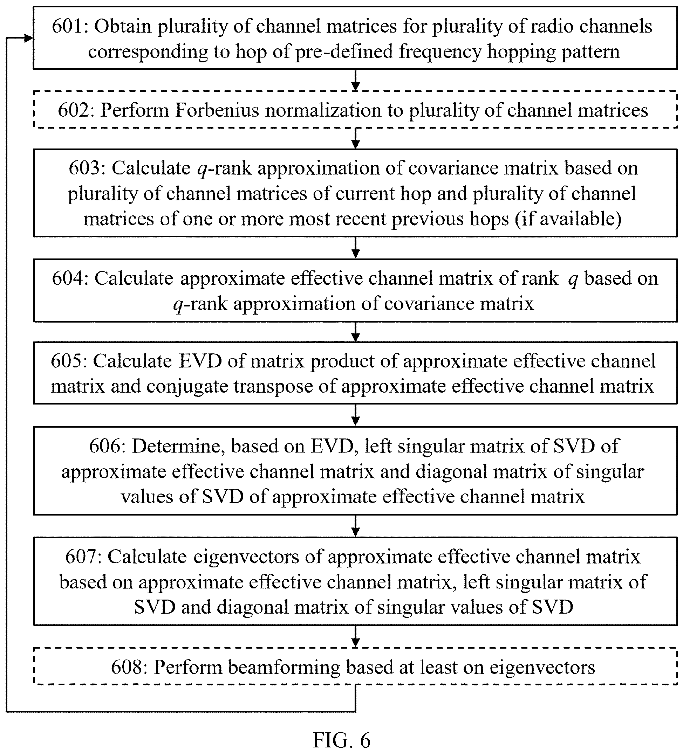

FIG. 6 illustrates a process for applying the process of FIG. 4 to the frequency hopping use case according to embodiments. In other words, FIG. 6 illustrates a process carried out in the above example discussed in connection with FIG. 5. The process of FIG. 6 may be carried out by an apparatus. The apparatus may be an access node such as an access node 104 of FIG. 1 or a part thereof. In some embodiments, the apparatus may be a distributed access node or at least one of RU, DU or RU of the distributed access node. For example, the apparatus may be an RU 116, 118 of FIG. 1, a DU 104 of FIG. 1, a CU 108 of FIG. 1 or a combination thereof. In the following, the entity carrying out the process of FIG. 6 is called simply an apparatus.

The basic process of FIG. 6 may correspond substantially to the process discussed in connection with FIG. 4. Thus, any of the features and definitions described in connection with FIG. 3 and/or FIG. 4 may apply, *mutatis mutandis,* also here.

In FIG. 6, it is assumed that transmission of SRSs (or other such reference signals for calculating channel matrices) and measurements of the SRSs are carried out according to a pre-defined frequency hopping pattern. One execution of blocks 601 to 608 may correspond to one SRS period of the pre-defined frequency hopping pattern.

Initially (i.e., at the start of the frequency hopping), the apparatus obtains, in block 601, a plurality of channel matrices for a plurality of radio channels. The plurality of channel matrices correspond to a respective plurality of PRBs. The plurality of channel matrices (and the plurality of PRBs), thus, correspond to a first hop of the pre-defined frequency hopping pattern. As described above, the obtaining in block 601 may comprise performing measurements of an SRS at the plurality of PRBs corresponding to an SRS bandwidth ($L$) and determining the plurality of channel matrices based on results of the measurements.

The apparatus may perform Forbenius normalization to the plurality of channel matrices, as described in connection with block 402 of FIG. 4.

The apparatus calculates, in block 603, a $q$-rank approximation of a covariance matrix based on the plurality of channel matrices, where $q$ is a positive integer, similar to as described in connection with block 402 of FIG. 4. Thus, during the first hop, the $q$-rank approximation of a covariance matrix is calculated based on all channel matrices that have been obtained this far.

Thereafter, the process may proceed in blocks 604 to 608 similar to as described above in connection with blocks 404 to 408 of FIG. 4.

Thereafter, the process of blocks 601 to 608 is repeated for the next hop of the pre-defined frequency hopping pattern. These subsequent repetitions of the process of blocks 601 to 608 may be carried out as follows. First, a plurality of channel matrices corresponding to SRS measurements of the $n$th hop is obtained in block 601, similar to as discussed previously, where $n$ is a positive integer larger than one. Following an optional Forbenius normalization of the newly obtained plurality of channel matrices in block 602, the apparatus calculates, in block 603, the $q$-rank approximation of the covariance matrix based on the plurality of channel matrices of a current hop (obtained during the latest execution of block 601) and a plurality of channel matrices of one or more most recent previous hops (obtained during one or more most recent previous executions of block 601). In other words, not only the latest channel matrices but also some previous channel matrices are used for calculating the *q*-rank approximation of the covariance matrix. Specifically, the plurality of channel matrices of the one or more most recent previous hops in block 603 may consist of (or comprise):

- if PRBs of channel matrices obtained this far fail, together, to fully cover a (cell) bandwidth (i.e., *N*) of the pre-defined frequency hopping pattern (i.e., if the frequency hopping is in the starting phase), all previously obtained channel matrices or
- if PRBs of channel matrices obtained this far cover together the (cell) bandwidth of the pre-defined frequency hopping pattern (i.e., if the frequency hopping is in the updating phase), channel matrices obtained during a pre-defined number of most recent previous hops.

In the latter case, the pre-defined number is selected so that PRBs associated with the plurality of channel matrices of the current hop and the plurality of channel matrices of the pre-defined number of most recent previous hops (i.e., the channel matrices used for calculating the q-rank approximation of the covariance matrix) fully cover together the bandwidth of the pre-defined frequency hopping pattern. Namely, the pre-defined number may be the smallest number for enabling covering the bandwidth of the pre-defined frequency hopping pattern. Said pre-defined number may be equal to $\frac{L}{N} - 1$, where *L* is the (cell) bandwidth and *N* is the SRS bandwidth. FIG. 5 provides one example of this specific embodiment where the pre-defined number is equal to 3, the (cell) bandwidth is 64 PRB and the SRS bandwidth is 16 PRB.

During these subsequent repetitions of the process, the actions pertaining to blocks 604 to 608 may be carried out similar to as described above in connection with blocks 404 to 408 of FIG 4.

It should be noted that the performing of the beamforming based on the calculated eigenvectors in block 608 may be carried out after each execution of blocks 601 to 607 (i.e., for every hop) or only every *n*th execution of blocks 601 to 607 (i.e., for every nth hop), where *n* is a positive integer.

The blocks, related functions, and information exchanges described above by means of FIGs. 3, 4 and 6 are in no absolute chronological order, and some of them may be performed simultaneously or in an order differing from the given one. Other functions can also be executed between them or within them, and other information may be sent, and/or other rules applied. Some of the blocks or part of the blocks or one or more pieces of information can also be left out or replaced by a corresponding block or part of the block or one or more pieces of information.

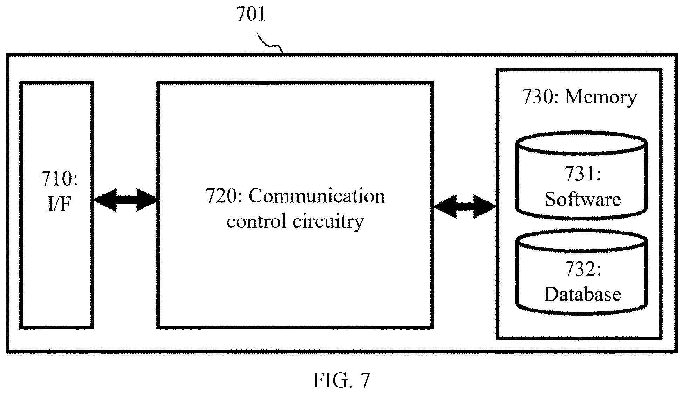

FIG. 7 provides an apparatus 701 according to some embodiments. Specifically, FIG. 7 may illustrate an apparatus configured to carry out at least some of the functions described above. The apparatus 701 may be or form a part of, e.g., a computing device. The apparatus 701 may be or form a part of a (non-distributed) access node or at least one of an RU, a DU or a CU of a distributed access node.

The apparatus 701 may comprise one or more communication control circuitry 720, such as at least one processor, and at least one memory 730, including one or more algorithms 731, such as a computer program code (software) wherein the at least one memory and the computer program code (software) are configured, with the at least one processor, to cause the apparatus 701 to carry out any one of the exemplified functionalities of the apparatus described above in connection with any of FIGs. 3 to 6. Said at least one memory 730 may also comprise at least one database 732.

When the one or more communication control circuitry 720 comprises more than one processor, the apparatus 701 may be a distributed device wherein processing of tasks takes place in more than one physical unit. Each of the at least one processor may comprise one or more processor cores. A processing core may comprise, for example, a Cortex-A12 processing core manufactured by ARM Holdings or a Zen processing core designed by Advanced Micro Devices Corporation. The one or more control circuitry 720 may comprise at least one Qualcomm Snapdragon and/or Intel Atom processor.

Referring to FIG. 7, the one or more communication control circuitry 720 of the apparatus 701 is configured to carry out functionalities described above by means of any of elements of FIGs. 3 to 6 using one or more individual circuitries. It may also be feasible to use specific integrated circuits, such as DSP block, digital signal processor, ASIC or FPGA, or other components and devices for implementing said functionalities in accordance with different embodiments.

Referring to FIG. 7, the apparatus 701 may further comprise different interfaces 710 such as one or more communication interfaces comprising hardware and/or software for realizing communication connectivity according to one or more communication protocols. For example, the one or more communication interfaces 710 may comprise at least one interface enabling communication between the apparatus and one or more terminal devices. Additionally or alternatively, the one or more communication interfaces 710 may comprise at least one interface enabling communication between the apparatus and at least one core network node and/or at least one interface enabling communication between the apparatus and one or more (other) access nodes. If the apparatus 701 forms a part of a distributed access node, the one or more communication interfaces 710 may comprise one or more interfaces providing one or more connections between the apparatus and other parts of the distributed access node.

Referring to FIG. 7, the memory 730 may be implemented using any suitable data storage technology, such as semiconductor based memory devices, flash memory, magnetic memory devices and systems, optical memory devices and systems, fixed memory and removable memory.

As used in this application, the term 'circuitry' may refer to one or more or all of the following: (a) hardware-only circuit implementations, such as implementations in only analog and/or digital circuitry, and (b) combinations of hardware circuits and software (and/or firmware), such as (as applicable): (i) a combination of analog and/or digital hardware circuit(s) with software/firmware and (ii) any portions of hardware processor(s) with software, including digital signal processor(s), software, and memory(ies) that work together to cause an apparatus, such as a terminal device or an access node, to perform various functions, and (c) hardware circuit(s) and processor(s), such as a microprocessor(s) or a portion of a microprocessor(s), that requires software (e.g. firmware) for operation, but the software may not be present when it is not needed for operation. This definition of 'circuitry' applies to all uses of this term in this application, including any claims. As a further example, as used in this application, the term 'circuitry' also covers an implementation of merely a hardware circuit or processor (or multiple processors) or a portion of a hardware circuit or processor and its (or their) accompanying software and/or firmware.

In an embodiment, at least some of the processes described in connection with FIGs. 3 to 6 may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, register, multiply-accumulate (MAC) unit, delay element, RAM, ROM, software, firmware, display, user interface, display circuitry, user interface circuitry, user interface software, display software, circuit, filter (low-pass, high-pass, bandpass and/or bandstop), sensor, circuitry, inverter, capacitor, inductor, resistor, operational amplifier, diode and transistor. In some embodiments, at least some of the processes may be implemented using discrete components. In an embodiment, at least some of the processes described in connection with FIGs. 3 to 6 may be carried out by an apparatus comprising corresponding hardware means for carrying out at least some of the described processes. Said hardware means may comprise at least one of: a multiplier, an adder, a MAC unit, a barrel shifter, a register, a shift register, a memory unit, a control logic, a clocking circuitry or a finite state machine.

According to an embodiment, there is provided an apparatus (e.g., an access node) comprising means for performing:

obtaining an approximate effective channel matrix for a radio channel between the apparatus, acting as a transmitter, and a receiver;
calculating an eigenvalue decomposition, EVD, of a matrix product of the approximate effective channel matrix and a conjugate transpose of the approximate effective channel matrix;
determining, based on the EVD, a left singular matrix of a singular value decomposition, SVD, of the approximate effective channel matrix and a diagonal matrix of singular values of the SVD of the approximate effective channel matrix; and
calculating eigenvectors of the approximate effective channel matrix based on the approximate effective channel matrix, the left singular matrix of the SVD and the diagonal matrix of singular values of the SVD.

Embodiments as described above may also be carried out, fully or at least in part, in the form of a computer process defined by a computer program or portions thereof. Embodiments of the methods described in connection with FIGs. 3 to 6 may be carried out by executing at least one portion of a computer program comprising corresponding instructions. The computer program may be provided as a computer readable medium comprising program instructions stored thereon or as a non-transitory computer readable medium comprising program instructions stored thereon. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, tele-communications signal, and software distribution package, for example. The computer program medium may be a non-transitory medium. Coding of software for carrying out the embodiments as shown and described is well within the scope of a person of ordinary skill in the art.

The term "non-transitory", as used herein, is a limitation of the medium itself (that is, tangible, not a signal) as opposed to a limitation on data storage persistency (for example, RAM vs. ROM).

Reference throughout this specification to one embodiment or an embodiment means that a particular feature, structure, or characteristic described in connection with the embodiment is included in at least one embodiment of the present solution. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present solution may be referred to herein along with alternatives for the various components thereof. It is understood that such embodiments, examples, and alternatives are not to be construed as de facto equivalents of one another, but are to be considered as separate and autonomous representations of the present solution.

Even though embodiments have been described above with reference to examples according to the accompanying drawings, it is clear that the embodiments are not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

INDUSTRIAL APPLICABILITY

At least some embodiments find industrial application in wireless communications.

**Claims**

1. An apparatus comprising:

   at least one processor; and
   at least one memory storing instructions that, when executed by the at least one processor, cause the apparatus at least to perform:

   obtaining (401) a plurality of channel matrices for a plurality of radio channels between the apparatus, acting as a transmitter, and a receiver, wherein the plurality of channel matrices correspond to a respective plurality of physical resource blocks, PRBs, forming a frequency bandwidth;
   calculating (403) a q-rank approximation of a covariance matrix based at least on the plurality of channel matrices, wherein q is a positive integer;
   calculating (404) an approximate effective channel matrix having rank q for a radio channel between the apparatus, acting as the transmitter, and the receiver based on the $q$-rank approximation of the covariance matrix;
   calculating (302, 405) an eigenvalue decomposition, EVD, of a matrix product of the approximate effective channel matrix and a conjugate transpose of the approximate effective channel matrix;
   determining (303, 406), based on the EVD, a left singular matrix of a singular value decomposition, SVD, of the approximate effective channel matrix and a diagonal matrix of singular values of the SVD of the approximate effective channel matrix;
   calculating (304, 407) eigenvectors of the approximate effective channel matrix based on the approximate effective channel matrix, the left singular matrix of the SVD and the diagonal matrix of singular values of the SVD; and
   performing (305, 408) beamforming based on the eigenvectors of the approximate effective channel matrix.

2. The apparatus of claim 1, wherein the obtaining (301) of the plurality of channel matrices comprises:

   performing measurements of one or more reference signals at the plurality of PRBs; and
   determining the plurality of channel matrices based on results of the measurements of the one or more reference signals.

3. The apparatus of claim 1 or 2, wherein the approximate effective channel matrix for the channel is an approximate effective channel matrix for a wideband channel having a frequency bandwidth comprising the plurality of PRBs.

4. The apparatus of claim 2, wherein the one or more reference signals consist of a sounding reference signal, SRS, the measurements of the SRS at the plurality of PRBs correspond to a first hop of a pre-defined frequency hopping pattern, and the at least one memory further stores instructions that, when executed by the at least one processor, cause the apparatus to repeat the performing of the apparatus at each subsequent hop of the pre-defined frequency hopping pattern,

wherein, during the repetitions, the calculating (403) of the q-rank approximation of the covariance matrix is based on a plurality of channel matrices of a current hop and a plurality of channel matrices of one or more most recent previous hops.

5. The apparatus of claim 4, wherein, during the repetitions, the plurality of channel matrices of the one or more most recent previous hops used in the calculating (403) of the q-rank approximation of the covariance matrix consist of:

   if PRBs of channel matrices obtained this far fail, together, to fully cover a bandwidth of the pre-defined frequency hopping pattern, all previously obtained channel matrices or
   otherwise, channel matrices obtained during a pre-defined number of most recent previous hops, the pre-defined number being selected so that PRBs associated with the plurality of channel matrices of the current hop and the plurality of channel matrices of the pre-defined number of most recent previous hops fully cover the bandwidth of the pre-defined frequency hopping pattern.

6. The apparatus according to any preceding claim, wherein the obtaining (301) of the approximate effective channel matrix further comprises, before the calculating (403) of the q-rank approximation of the covariance matrix: performing (402) Forbenius normalization for the plurality of channel matrices.

7. The apparatus according to any preceding claim, wherein q is smaller than or equal to the number of receiver antennas associated with the radio channel.

8. The apparatus of claim 7, wherein the calculating (403) of the $q$-rank approximation of the covariance matrix $\mathbf{R}_{\text{refsig}}^{\text{apr}}$ is performed according to

$$\mathbf{R}_{\text{refsig}}^{\text{apr}} = \mathbf{R}_{\text{dl,dlq}}\mathbf{R}_{\text{dl,q}}^{-1}\left(\mathbf{R}_{\text{dl,dlq}}\right)^{\text{H}},$$

wherein 'H' is a conjugate transpose operation and $\mathbf{R}_{\text{dl,dlq}}$ and $\mathbf{R}_{\text{dl,q}}$ are defined as

$$\mathbf{R}_{\text{dl,dlq}} = \frac{1}{L}\sum_{i=1}^{L} \mathbf{H}_{i,t}^{\text{H}}\mathbf{H}_{i,t,q},$$

$$\mathbf{R}_{\text{dl,q}} = \frac{1}{L}\sum_{i=1}^{L} \mathbf{H}_{i,t,q}^{\text{H}}\mathbf{H}_{i,t,q},$$

wherein $L$ is the number of the plurality of PRBs, $\mathbf{H}_{i,t}$ is an $N_r \times N_t$ channel matrix for $i$-th PRB of the plurality of PRBs and $t$-th reference signal period of one or more reference signal periods and $\mathbf{H}_{i,t,q}$ is a $N_r \times q$ submatrix of $\mathbf{H}_{i,t}$, $N_r$ and $N_t$ being, respectively, the number of receiver and transmitter antennas associated with the radio channel.

9. The apparatus according to any of claims 1 to 7, wherein $q$ is larger than the number of receiver antennas associated with the radio channel but smaller than the number of transmitter antennas associated with the radio channel.

10. The apparatus of claim 9, wherein the calculating (403) of the $q$-rank approximation $\mathbf{R}_{\text{refsig}}^{\text{apr}}$ of the covariance matrix is performed according to

$$\mathbf{R}_{\text{refsig}}^{\text{apr}} = \mathbf{R}_{\text{dl,dlq}}\mathbf{R}_{\text{dl,q}}^{-1}\left(\mathbf{R}_{\text{dl,dlq}}\right)^{\text{H}},$$

wherein superscript 'H' is a conjugate transpose operation and $\mathbf{R}_{\text{dl,dlq}}$ and $\mathbf{R}_{\text{dl,q}}$ are defined as

$$\mathbf{R}_{\mathrm{dl,dlq}} = \mathbf{R}_{\mathrm{refsig}}(:,S),$$

$$\mathbf{R}_{\mathrm{dl},q} = \mathbf{R}_{\mathrm{refsig}}(S,S),$$

wherein $\mathbf{R}_{\mathrm{refsig}}$ is the covariance matrix having dimensions $N_t \times N_t$ and $S$ is a set of indices having a total number of $q$.

11. The apparatus of claim 8 or 10, wherein the calculating (404) of the approximate effective channel matrix $\mathbf{H}_{\mathrm{dl}}^{\mathrm{apr}}$ based on the $q$-rank approximation of the covariance matrix $\mathbf{R}_{\mathrm{refsig}}^{\mathrm{apr}}$ is performed according to

$$\mathbf{H}_{\mathrm{dl}}^{\mathrm{apr}} = \left(\mathbf{R}_{\mathrm{dl,dlq}}\mathbf{R}_{\mathrm{dl},q}^{-\frac{1}{2}}\right)^{\mathrm{H}}.$$

12. The apparatus according to any preceding claim, wherein the determining (303) of the left singular matrix $\mathbf{U}_{\mathrm{dl,apr}}$ of the SVD of the approximate effective channel matrix and the diagonal matrix $\Sigma_{\mathrm{dl,apr}}$ of singular values of the SVD of the approximate effective channel matrix is performed based on the following relation:

$$\mathrm{EVD}\left(\mathbf{H}_{\mathrm{dl}}^{\mathrm{apr}}(\mathbf{H}_{\mathrm{dl}}^{\mathrm{apr}})^{\mathrm{H}}\right) = \mathbf{U}_{\mathrm{dl,apr}}\Sigma_{\mathrm{dl,apr}}^{2}\mathbf{U}_{\mathrm{dl,apr}}^{\mathrm{H}},$$

wherein superscript 'H' indicates a conjugate transpose operation

13. The apparatus of claim 12, wherein the calculating (304) of the eigenvectors of the approximate effective channel matrix based on the approximate effective channel matrix and the left singular matrix of the SVD is performed according to

$$\mathbf{V}_{\mathrm{dl,apr}} = \left(\mathbf{H}_{\mathrm{dl}}^{\mathrm{apr}}\right)^{\mathrm{H}}\mathbf{U}_{\mathrm{dl,apr}}\left(\Sigma_{\mathrm{dl,apr}}^{\mathrm{H}}\right)^{-1},$$

wherein $\mathbf{V}_{\mathrm{dl,apr}}$ is a right singular matrix of the SVD of the approximate effective channel matrix defining the eigenvectors of the approximate effective channel matrix.

14. A method comprising:

obtaining (401) a plurality of channel matrices for a plurality of radio channels between an apparatus, acting as a transmitter, and a receiver, wherein the plurality of channel matrices correspond to a respective plurality of physical resource blocks, PRBs, forming a frequency bandwidth;
calculating (403) a $q$-rank approximation of a covariance matrix based at least on the plurality of channel matrices, wherein $q$ is a positive integer;
calculating (404) an approximate effective channel matrix having rank $q$ for a radio channel between the apparatus, acting as the transmitter, and the receiver based on the $q$-rank approximation of the covariance matrix;
calculating (302, 405) an eigenvalue decomposition, EVD, of a matrix product of the approximate effective channel matrix and a conjugate transpose of the approximate effective channel matrix;
determining (303, 406), based on the EVD, a left singular matrix of a singular value decomposition, SVD, of the approximate effective channel matrix and a diagonal matrix of singular values of the SVD of the approximate effective channel matrix;
calculating (304, 407) eigenvectors of the approximate effective channel matrix based on the approximate effective channel matrix, the left singular matrix of the SVD and the diagonal matrix of singular values of the SVD; and
performing (305, 408) beamforming based on the eigenvectors of the approximate effective channel matrix.

15. A non-transitory computer readable medium comprising program instructions that, when executed by an apparatus, cause the apparatus to perform at least the following:

obtaining (401) a plurality of channel matrices for a plurality of radio channels between the apparatus, acting as a transmitter, and a receiver, wherein the plurality of channel matrices correspond to a respective plurality of physical resource blocks, PRBs, forming a frequency bandwidth;

calculating (403) a $q$-rank approximation of a covariance matrix based at least on the plurality of channel matrices, wherein $q$ is a positive integer;

calculating (404) an approximate effective channel matrix having rank $q$ for a radio channel between the apparatus, acting as the transmitter, and the receiver based on the $q$-rank approximation of the covariance matrix;

calculating (302, 405) an eigenvalue decomposition, EVD, of a matrix product of the approximate effective channel matrix and a conjugate transpose of the approximate effective channel matrix;

determining (303, 406), based on the EVD, a left singular matrix of a singular value decomposition, SVD, of the approximate effective channel matrix and a diagonal matrix of singular values of the SVD of the approximate effective channel matrix;

calculating (304, 407) eigenvectors of the approximate effective channel matrix based on the approximate effective channel matrix, the left singular matrix of the SVD and the diagonal matrix of singular values of the SVD; and

performing (305, 408) beamforming based on the eigenvectors of the approximate effective channel matrix.

FIG. 1

FIG. 2

301: Obtain approximate effective channel matrix for radio channel

302: Calculate EVD of matrix product of approximate effective channel matrix and conjugate transpose of approximate effective channel matrix

303: Determine, based on EVD, left singular matrix of SVD of approximate effective channel matrix and diagonal matrix of singular values of SVD of approximate effective channel matrix

304: Calculate eigenvectors of approximate effective channel matrix based on approximate effective channel matrix, left singular matrix of SVD and diagonal matrix of singular values of SVD

305: Perform beamforming based at least on eigenvectors

FIG. 3

401: Obtain plurality of channel matrices for plurality of radio channels

402: Perform Forbenius normalization to plurality of channel matrices

403: Calculate $q$-rank approximation of covariance matrix based at least on plurality of channel matrices

404: Calculate approximate effective channel matrix of rank $q$ based on $q$-rank approximation of covariance matrix

405: Calculate EVD of matrix product of approximate effective channel matrix and conjugate transpose of approximate effective channel matrix

406: Determine, based on EVD, left singular matrix of SVD of approximate effective channel matrix and diagonal matrix of singular values of SVD of approximate effective channel matrix

407: Calculate eigenvectors of approximate effective channel matrix based on approximate effective channel matrix, left singular matrix of SVD and diagonal matrix of singular values of SVD

408: Perform beamforming based at least on eigenvectors

FIG. 4

*Starting phase*    *Updating phase*

*SRS Period*

*Channel estimated in the starting phase*

*Channel updated in current period*

*Aged channel*

*Cell Bandwidth: 64 PRB*

*SRS bandwidth: 16 PRB*

*LCWBB* $W_t$ *in Starting Phase:*

$$W_1 = LCWBB\left(H_{1,p1,k}, k = 1 \ldots 16\right)$$

$$W_2 = LCWBB\left(H_{1,p1,k}, H_{2,p3,k}, k = 1 \ldots 16\right)$$

$$W_3 = LCWBB\left(H_{1,p1,k}, H_{2,p3,k}, H_{3,p2,k}, k = 1 \ldots 16\right)$$

$$W_4 = LCWBB\left(H_{1,p1,k}, H_{2,p3,k}, H_{3,p2,k}, H_{4,p4,k}, k = 1 \ldots 16\right)$$

*LCWBB* $W_t$ *in Updating Phase:*

$$W_5 = LCWBB\left(\boxed{H_{5,p1,k}}, H_{2,p3,k}, H_{3,p2,k}, H_{4,p4,k}, k = 1 \ldots 16\right)$$

$$W_6 = LCWBB\left(\boxed{H_{6,p3,k}, H_{5,p1,k}}, H_{3,p2,k}, H_{4,p4,k}, k = 1 \ldots 16\right)$$

FIG. 5

601: Obtain plurality of channel matrices for plurality of radio channels corresponding to hop of pre-defined frequency hopping pattern

602: Perform Forbenius normalization to plurality of channel matrices

603: Calculate $q$-rank approximation of covariance matrix based on plurality of channel matrices of current hop and plurality of channel matrices of one or more most recent previous hops (if available)

604: Calculate approximate effective channel matrix of rank $q$ based on $q$-rank approximation of covariance matrix

605: Calculate EVD of matrix product of approximate effective channel matrix and conjugate transpose of approximate effective channel matrix

606: Determine, based on EVD, left singular matrix of SVD of approximate effective channel matrix and diagonal matrix of singular values of SVD of approximate effective channel matrix

607: Calculate eigenvectors of approximate effective channel matrix based on approximate effective channel matrix, left singular matrix of SVD and diagonal matrix of singular values of SVD

608: Perform beamforming based at least on eigenvectors

FIG. 6

701

FIG. 7

Europäisches
Patentamt

European
Patent Office

Office européen
des brevets

## EUROPEAN SEARCH REPORT

**Application Number**

EP 25 18 0244

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | WO 2023/282840 A1 (ERICSSON TELEFON AB L M [SE]) 12 January 2023 (2023-01-12)<br>* the whole document *<br><br>& US 2024/372754 A1 (ÅHLANDER MATS [SE] ET AL) 7 November 2024 (2024-11-07)<br>* paragraphs [0007], [0035], [0037], [0052] - [0068]; figure 3 *<br>----- | 1-3,7,9,<br>12-15<br>6<br>4,5,8,<br>10,11 | INV.<br>H04B7/0426<br>H04B7/0456<br>H04B7/06<br>G06F17/16 |
| Y | US 2023/087742 A1 (LEE HEUNCHUL [SE] ET AL) 23 March 2023 (2023-03-23)<br>* paragraph [0089] *<br>----- | 6 | |

**TECHNICAL FIELDS SEARCHED (IPC)**

H04B
G06F

The present search report has been drawn up for all claims

| Place of search | Date of completion of the search | Examiner |
|---|---|---|
| Munich | 1 October 2025 | Ganis, Alexander |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

**EP 25 18 0244**

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2025

| Patent document cited in search report | Publication date | Patent family member(s) | | Publication date |
|---|---|---|---|---|
| WO 2023282840 A1 | 12-01-2023 | CN | 117616702 A | 27-02-2024 |
| | | EP | 4367807 A1 | 15-05-2024 |
| | | US | 2024372754 A1 | 07-11-2024 |
| | | WO | 2023282840 A1 | 12-01-2023 |
| US 2023087742 A1 | 23-03-2023 | EP | 4122113 A1 | 25-01-2023 |
| | | US | 2023087742 A1 | 23-03-2023 |
| | | WO | 2021188036 A1 | 23-09-2021 |

EPO FORM P0459

For more details about this annex : see Official Journal of the European Patent Office, No. 12/82